# EUROPÄISCHE PATENTANMELDUNG

(11) **EP 1 184 645 A1**
(43) Veröffentlichungstag der Anmeldung: **06.03.2002**
(21) Anmeldenummer: 00810771.6
(22) Anmeldetag: 29.08.2000
(51) Int. Cl.: G01D 5/30, G01D 4/00, G06M 1/272

(54) **Optischer Winkel- oder Wegmessgeber**

(71) Anmelder: ABB RESEARCH LTD., 8050 Zürich (CH)
(72) Erfinder: Byatt, Anthony, 5313 Klingnau (CH); Kleiner, Thomas, 5415 Rieden-Nussbaumen (CH); Prêtre, Philippe, Dr., 5405 Baden-Dättwil (CH); Matter, Daniel, Dr., 5200 Brugg (CH)
(74) Vertreter: ABB Patent Attorneys

(57) **Zusammenfassung**

Der Messgeber dient zur Bestimmung der gegenseitigen Lage einer Massverkörperung (3) und eines relativ zur Massverkörperung (3) in einer Richtung bewegbaren Abtastkopfes (2). Gebündeltes Licht wird von einer Lichtquelle (21) auf dem Abtastkopf (2) ausgesandt, an der Massverkörperung (3) reflektiert und auf dem Abtastkopf (2) detektiert. Die Reflexion an der Massverkörperung (3) erfolgt derart, dass die Lage des Lichtflecks, welcher auf dem Abtastkopf (2) entsteht, von der gegenseitigen Lage der Massverkörperung (3) und des Abtastkopfes (2) abhängt. Die von Detektoren (22.1, 22.2) auf dem Abtastkopf (2) detektierte Lichtintensität ist also ein Mass für die gegenseitige Lage der Massverkörperung (3) und des Abtastkopfes (2). Die Massverkörperung (3) ist vorzugsweise als Reflexionsprisma ausgebildet, dessen Achse leicht windschief zur Bewegungsrichtung liegt. Der Messgeber arbeitet berührungslos, ist einfach und kostengünstig herstellbar und weist eine geringe Empfindlichkeit gegenüber Verschmutzungen auf. Er kann in bestehende Verbrauchszähler wie bspw. Strom- oder Wasserzähler integriert werden, um deren automatische Ablesung zu ermöglichen.

## Beschreibung

### TECHNISCHES GEBIET

Die Erfindung betrifft einen optischen Winkel- oder Wegmessgeber und ein Verfahren zur optischen Winkel- oder Wegmessung gemäss den Oberbegriffen der unabhängigen Patentansprüche. Sie kann bspw. in Verbrauchszählern wie Stromzählern, Wasserzählern, Kilometerzählern in Fahrzeugen etc. eingesetzt werden.

### STAND DER TECHNIK

Viele Verbrauchszähler, z.B. Stromzähler oder Wasserzähler, sind heute aus Gründen der Zuverlässigkeit, der Sicherheit, aber auch aus historischen Gründen immer noch als mechanische Zähler ausgebildet. Ihre Auslesung geschieht heute vielfach noch mittels visueller Ablesung eines Angestellten der Abrechnungsfirma in den Wohnungen der Kunden selbst. Diese Arbeit ist zeitintensiv und umständlich, da der Zugang zu den einzelnen Wohnungen vor jedem Ablesen sichergestellt sein muss. Als Folge werden die Ableseintervalle meist sehr lang, was eine kosteneffiziente (z. B. monatliche) Abrechnung verunmöglicht. Um die Information eines solchen Zählers für die elektronische Datenverarbeitung nutzbar zu machen, z. B. zur Fernablesung, ist eine Vorrichtung bzw. ein Verfahren erforderlich, mit welchem der Zählerstand ermittelt und als elektrisches Ausgangssignal ausgelesen werden kann, ohne die Funktion des Zählers zu behindern.

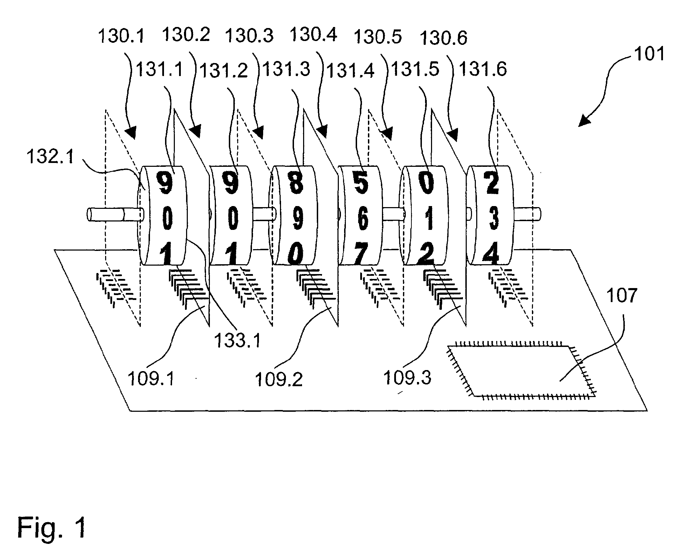

In einigen Märkten sind Geräte im Einsatz, bei denen der Zählerstand elektronisch über Kabel und ein spezielles Auslesegerät von ausserhalb der Wohnung abgelesen werden kann. Zu diesem Zweck muss die Zählerstandinformation zuerst einmal entkodiert und in ein elektrisches Signal umgewandelt werden. **Figur 1** zeigt einen Entkoder 101 gemäss dem Stand der Technik.

Dieser Entkoder 101 ist mit zylindrischen Zählerrädchen 130.1-130.6 ausgestattet, deren Mantelflächen 131.1-131.6 nach wie vor mit Ziffern 0 bis 9 zur visuellen Ablesung bezeichnet sind. Die Stirnseiten 132.1-132.6, 133.1-133.6 der Zählerrädchen 130.1-130.6 weisen als Massverkörperungen geeignete (bspw. mit einem Gray-Code versehene) Leiterbahnen auf, welche von Schleifkontakten abgegriffen werden. Eine andere bekannte Ausführungsform funktioniert mit Lichtschranken, die axial durch eine geeignete Schlitzmaske auf dem Zählerrädchen die Position des Zählerrädchens erfassen. Eine elektronische Auswerteeinheit 107 wertet die Signale aus. Beide Ausführungsformen haben den Nachteil, dass zwischen den einzelnen Zählerrädchen 130.1-130.6 eine Vorrichtung 109, bspw. eine gedruckte Schaltung (printed circuit board, PCB) zur Befestigung der Schleifkontakte bzw. von Lichtquelle und Lichtempfänger vorhanden sein muss. Dies macht den Entkoder 101 aufwendig und teuer. Bei den Schleifkontakten kommt hinzu, dass im jahrelangen Betrieb Abnutzungserscheinungen auftreten; kontaktlose Lösungen wären vorzuziehen, um die Langzeitstabilität zu erhöhen.

Eine andere Klasse bekannter Drehgeber vermeidet den Nachteil zwischen den Scheiben anzubringender Messköpfe, indem eine Massverkörperung auf der Mantelfläche der Scheibe (oder Trommel) angebracht wird. In der Schrift JP-11 051 702 A ist die Massverkörperung als sequentieller, binärer Code auf einer geschlossenen Bahn entlang einem Trommelumfang ausgebildet. Der Code wird auf einen Detektor abgebildet und von diesem erfasst. Die Auswertung eines solchen Codes ist aber aufwendig und teuer, so dass dieser Drehgeber für Low-Cost-Anwendungen wie Strom- oder Wasserzähler kaum geeignet ist.

Eine andere Lösung wird in der Schrift JP-09 014 941 A vorgeschlagen. Demgemäss ist eine nicht-reflektierende Mantelfläche der Trommel von einem reflektierenden Band umwickelt, welches jedoch nicht geschlossen ist, so dass das Band die Form einer Schraubenlinie mit einer Windung aufweist und die Position des Bandes in axialer Richtung von der Winkellage der Trommel abhängt. Die Trommel wird von einer Richtung her entlang ihrer gesamten Länge beleuchtet; der beleuchtete Teil der Trommel wird auf einen eindimensionalen Positionsdetektor abgebildet. Die vom Positionsdetektor ermittelte axiale Position des Bandes ist ein Mass für die Winkellage der Trommel. Dieser Drehgeber hat einige Nachteile. Er ist anfällig ist auf Verschmutzungen der Mantelfläche. Der Positionsdetektor ist eine relativ teure, störungsanfällige Komponente. Die Lichtausbeute ist schlecht, weil nur der vom schmalen Band reflektierte Lichtanteil auf den Detektor gelangt.

### DARSTELLUNG DER ERFINDUNG

Es ist Aufgabe der Erfindung, einen Winkel- oder Wegmessgeber zu schaffen und ein Verfahren zur optischen Winkel- oder Wegmessung anzugeben, welche die obigen Nachteile vermeiden. Insbesondere soll der Messgeber berührungslos arbeiten, einfach und kostengünstig herstellbar sein und eine geringe Empfindlichkeit gegenüber Verschmutzungen aufweisen. Als Drehgeber ausgeführt, soll er radial messen. Die Aufgabe wird gelöst durch den Messgeber und das Verfahren, wie sie in den unabhängigen Patentansprüchen definiert sind.

Zur präzisen Beschreibung der Erfindung werden nachfolgend zwei häufig verwendete Begriffe für die gesamte vorliegende Schrift definiert.

### • "Licht":

Unter "Licht" wird in dieser Schrift sichtbares Licht (VIS), aber auch andere elektromagnetische Strahlung mit ähnlichen Eigenschaften, insbesondere infrarote (IR) oder ultraviolette (UV) Strahlung, verstanden.

### • "Bewegungsrichtung":

Wie eingangs erwähnt, dient die Erfindung der Bestimmung der gegenseitigen Lage einer Massverkörperung und eines relativ zur Massverkörperung in einer Richtung bewegbaren Abtastkopfes. Es muss nun zwischen Weg- und Winkelmessgeber unterschieden werden. Bei einem Wegmessgeber wird die Massverkörperung gegenüber dem Abtastkopf linear verschoben; in diesem Fall ist die Bewegungsrichtung trivialerweise die Richtung (vorwärts oder rückwärts) dieser linearen Translation. Bei einem Winkelmessgeber wird die Massverkörperung in Form einer Scheibe, Rolle oder Trommel gegenüber dem Abtastkopf gedreht; in diesem Fall wird unter "Bewegungsrichtung" die Richtung (vorwärts oder rückwärts) eines momentanen Geschwindigkeitsvektors eines Punktes der Massverkörperung im Bereich des Abtastkopfes verstanden.

Die Erfindung beruht auf der Idee, Licht vom Abtastkopf auszusenden, an der Massverkörperung zu reflektieren und auf dem Abtastkopf zu detektieren. Dabei wird das ausgesandte Licht in Richtung senkrecht zur Bewegungsrichtung gebündelt und derart an der Massverkörperung reflektiert, dass die Lage des Lichtflecks, welcher auf dem Abtastkopf entsteht, von der gegenseitigen Lage der Massverkörperung und des Abtastkopfes abhängt. Die Lage des Lichtflecks ist also ein Mass für die gegenseitige Lage der Massverkörperung und des Abtastkopfes.

Dementsprechend ist beim erfindungsgemäsen Messgeber die Massverkörperung zumindest teilweise reflektierend ausgebildet, und der Abtastkopf beinhaltet Mittel zur Beleuchtung der Massverkörperung und Mittel zur Detektion von von der Massverkörperung reflektiertem Licht. Die Beleuchtungsmittel sind derart ausgebildet, dass das von ihnen ausgesandte Licht in Richtung senkrecht zur Bewegungsrichtung gebündelt ist. Die Massverkörperung ist derart ausgebildet, dass die Lage des Lichtflecks, welcher durch Reflexion des ausgesandten Lichtes an der Massverkörperung auf dem Abtastkopf entsteht, von der gegenseitigen Lage der Massverkörperung und des Abtastkopfes abhängt.

Die Massverkörperung ist vorzugsweise als im wesentlichen rechtwinkliges dreikantiges Reflexionsprisma ausgebildet, dessen Achse leicht windschief zur Bewegungsrichtung liegt, d. h. typischerweise um einige Grad gegenüber der Bewegungsrichtung verdreht ist. Das Reflexionsprisma ist derart angeordnet, dass das Licht an den beiden senkrecht zueinander stehenden Prismenflächen je einmal reflektiert wird und durch die dritte Prismenfläche ins Prisma eintritt bzw. aus dem Prisma austritt.

Zur Bestimmung der Lage des Lichflecks kann bspw. ein einziger, flächenmässig begrenzter Intensitätstdetektor verwendet werden, dessen Ausdehnung in Richtung senkrecht zur Bewegungsrichtung vergleichbar ist mit der entsprechenden Ausdehnung des Lichtflecks in der Detektorebene. Bei einer geeigneten Positionierung des Detektors in Bezug auf den Lichtfleck wird dann je nach Lage des Lichtflecks der Detektor mit mehr oder weniger Licht beaufschlagt, so dass die detektierte Lichtintensität ein Mass für die gegenseitige Lage der Massverkörperung und des Abtastkopfes ist. In einer bevorzugten Ausführungsform beinhaltet der Abtastkopf jedoch eine Lichtquelle und zwei Intensitätsdetektoren, welche auf einer Geraden senkrecht zur Bewegungsrichtung angeordnet sind, derart, dass die Lichtquelle zwischen den beiden Detektoren liegt. Ausgangssignale der Lichtdetektoren werden ausgewertet, indem eine Differenz oder ein Quotient der Ausgangssignale gebildet wird; so wird das Ausgangssignal des Messgebers weitgehend unabhängig von Intensitätsschwankungen der Lichtquelle, von Verschmutzungen der Massverkörperung etc.

### KURZE BESCHREIBUNG DER ZEICHNUNGEN

- Fig. 1: zeigt einen automatisch ablesbaren Verbrauchszähler gemäss Stand der Technik.
- Fig. 2-5: zeigen schematisch vier Ausführungsformen des erfindungsgemässen Messgebers.
- Fig. 6 und 7: zeigen schematisch zwei erfindungsgemässe, der Ausführungsform von Fig. 5 entsprechende Wegmessgeber in perspektivischer Darstellung.
- Fig. 8: zeigt schematisch die Funktionsweise der Ausführungsform von Fig. 7.
- Fig. 9-11: zeigen schematisch drei erfindungsgemässe, der Ausführungsform von Fig. 5 entsprechende Winkelmessgeber in perspektivischer Darstellung.

### WEGE ZUR AUSFÜHRUNG DER ERFINDUNG

Im folgenden werden einige bevorzugte Ausführungsformen der Erfindung anhand der Zeichnungen detailliert beschrieben.

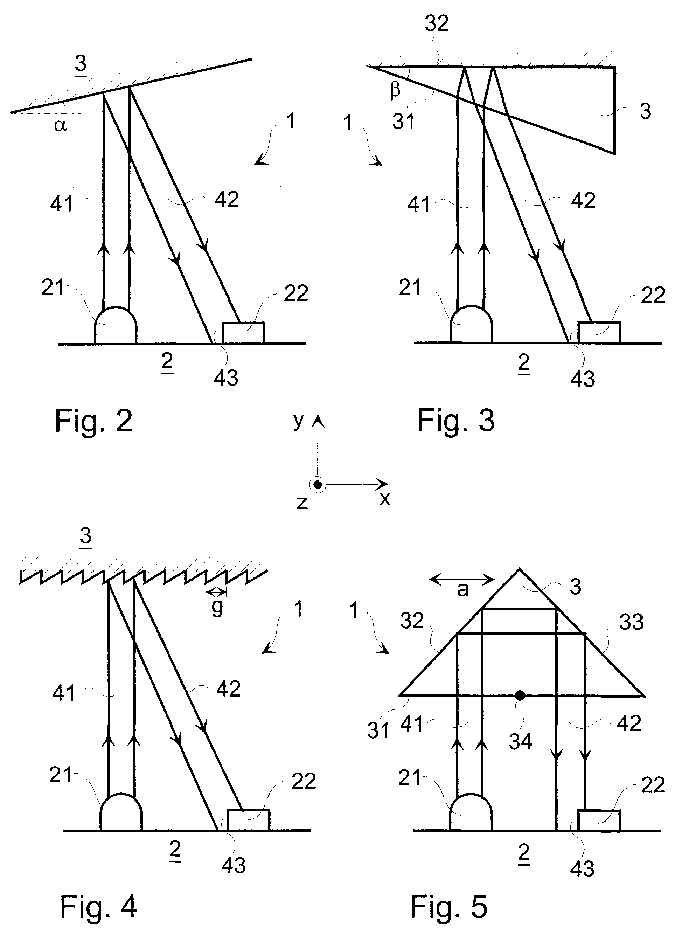

In den **Figuren 2-5** sind schematisch vier Ausführungsformen des erfindungsgemässen Messgebers 1 dargestellt. Das eingezeichnete kartesische Koordinatensystem (x, y, z) ist für alle vier Figuren 2-5 gültig. Der Messgeber 1 beinhaltet jeweils einen Abtastkopf 2 und eine Massverkörperung 3, welche in ±z-Richtung relativ zueinander bewegbar sind. Der Abtastkopf ist mit einer Lichtquelle 21 und einem Lichtdetektor 22 versehen. Die Lichtquelle 21 kann bspw. eine Leuchtdiode (LED) sein, der Lichtdetektor 22 eine die einfallende Lichtintensität messende Fotodiode. Die Lichtquelle 21 sendet gebündeltes Licht 41 gegen die Massverkörperung hin aus. Das ausgesandte Licht 41 ist zumindest in x-Richtung, vorzugsweise aber sowohl in x- als auch in z-Richtung gebündelt, womit hier gemeint ist, dass die Strahldivergenz im Messgeber 1 einen durch die Anordnung und die geforderte Auflösung gegebenen Wert, bspw. 10°, nicht überschreitet und vorzugsweise annähernd parallele Begrenzungen aufweist, wie in den Fig. 2-5 angedeutet. Die Bündelung des Lichts 41 kann durch die Lichtquelle 21 selbst, mit einer in der Lichtquelle 21 eingebauten Optik oder mit einer der Lichtquelle 21 nachgeschalteten (nicht eingezeichneten) Optik erfolgen. Das Licht 41 wird an der Massverkörperung 3 derart reflektiert, dass es als gebündelter Lichtstrahl 42 zum Abtastkopf 2 zurückläuft.

Erfindungsgemäss ist nun die Massverkörperung 3 derart ausgebildet, dass die Lage des vom reflektierten Licht 42 auf dem Abtastkopf 2 verursachten Lichtflecks 43 von der gegenseitigen Lage der Massverkörperung 3 und des Abtastkopfes 2 abhängt.

Dies kann auf verschiedene Weisen geschehen, wofür die Figuren 2-5 Beispiele geben.

In der Ausführungsform von **Figur 2** ist die Massverkörperung 3 im Wesentlichen als reflektierende Fläche ausgebildet, welche im Allgemeinen gegenüber der x-Richtung leicht geneigt ist. Dabei ändert sich der Neigungswinkel α(z) der reflektierenden Fläche mit der Position z in Bewegungsrichtung, so dass der Lichtfleck 43 je nach Position z mehr oder weniger auf den Detektor 22 fällt.

In der Ausführungsform von **Figur 3** hat die Massverkörperung 3, jeweils an einer Position betrachtet, einen im Allgemeinen keilförmigen Querschnitt. Das Licht 41 wird an einer ersten, gegenüber der x-Richtung leicht geneigten Fläche 31 in den bspw. aus Kunststoff oder Glas bestehenden Keil 3 hineingebrochen, an einer zweiten, vorzugsweise verspiegelten Fläche 32 reflektiert und an der ersten Fläche 31 wieder aus dem Keil 3 herausgebrochen; die Brechung erfolgt nach dem bekannten Brechungsgesetz von Snellius. Dabei ändert sich der Keilwinkel β(z) mit der Position z in Bewegungsrichtung, so dass der Lichtfleck 43 je nach Position z mehr oder weniger auf den Detektor 22 fällt.

In der Ausführungsform von **Figur 4** ist die reflektierende Fläche der Massverkörperung 3 mit einem Beugungsmuster, vorzugsweise einem eindimensionalen Beugungsgitter wie z. B. einem Blaze-Gitter, versehen. Dabei ändert sich die Gitterperiode g(z) des Beugungsgitters mit der Position z in Bewegungsrichtung, so dass der Lichtfleck 43 je nach Position z mehr oder weniger auf den Detektor 22 fällt.

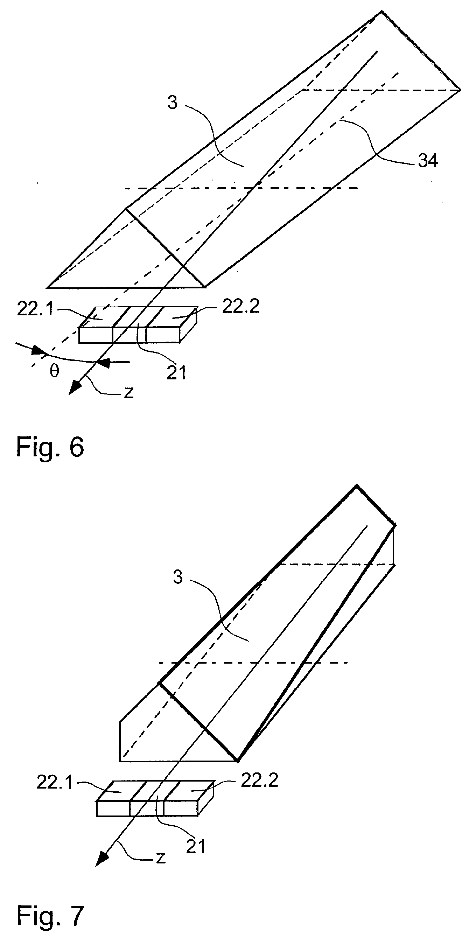

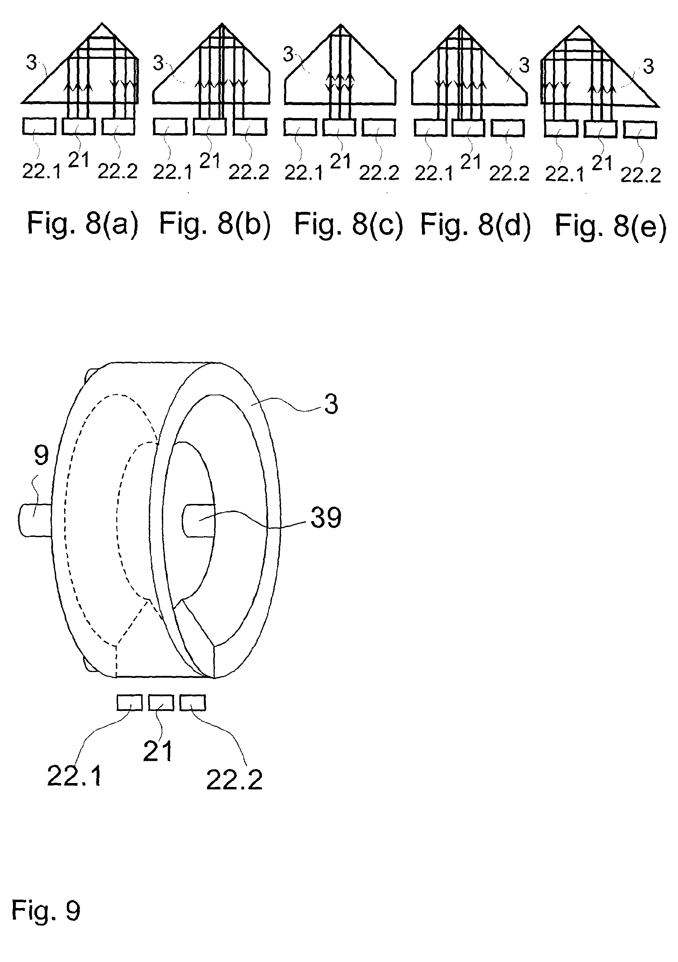

In der Ausführungsform von **Figur 5** ist die Massverkörperung 3, jeweils an einer Position betrachtet, als rechtwinkliges dreikantiges Reflexionsprisma, bspw. aus Kunststoff oder Glas, ausgebildet. Das Licht 41 tritt durch eine erste, vorzugsweise parallel zur xz-Ebene liegende Fläche 31 ins Prisma 3 ein, wird, vorzugsweise durch Totalreflexion, nacheinander an den beiden rechtwinklig zueinander stehenden Flächen 32, 33 reflektiert und tritt durch die erste Fläche 31 aus dem Prisma 3 aus. Dabei ist die Prismenachse 34 gegenüber der Bewegungsrichtung z leicht gedreht (vgl. Fig. 6). Die x-Position des Prismas, welche in Fig. 5 mit a bezeichntet ist, ändert sich also mit der Position z in Bewegungsrichtung, so dass der Lichtfleck 43 je nach Position z mehr oder weniger auf den Detektor 22 fällt (vgl. Fig. 8).

Die lichtempfindliche Fläche des Detektors 22 ist vorzugsweise mit der Fläche des Lichtflecks 42 auf dem Abtastkopf vergleichbar. Wenn diese Bedingung erfüllt ist, erhält man mit einem einzigen Detektor 22 eine maximale Empfindlichkeit des Messgebers. Eine bevorzugte Ausführungsform beinhaltet jedoch zwei Detektoren, wie in den nachfolgenden Figuren 6-11 illustriert.

**Figur 6** zeigt schematisch einen erfindungsgemässen, der Ausführungsform von Fig. 5 entsprechenden Wegmessgeber in perspektivischer Darstellung. Die Massverkörperung ist als rechtwinkliges dreikantiges Reflexionsprisma ausgebildet, dessen Achse 34 gegenüber der Bewegungsrichtung z um einen kleinen Winkel θ gedreht ist. Der Winkel θ hängt vom Messbereich, von der gewünschten Auflösung und von der Auflösung der Detektoren 22.1, 22.2 ab und kann vom Fachmann gemäss den jeweiligen Gegebenheiten und Anforderungen geeignet gewählt werden; typische Winkel θ liegen zwischen 1° und 10°.

Der Wegmessgeber von Fig. 6 ist mit zwei Detektoren 22.1, 22.2 ausgestattet. Sie liegen vorzugsweise zusammen mit der Lichtquelle 21 auf einer Geraden parallel zur x-Richtung, wobei die Lichtquelle 21 zwischen den beiden Detektoren 22.1, 22.2 liegt. Diese Anordnung ist vorteilhaft für die Signalauswertung. Zur Auswertung der Ausgangssignale der Lichtdetektoren kann eine Differenz oder ein Quotient der Detektor-Ausgangssignale gebildet werden; so wird das Ausgangssignal des Messgebers weitgehend unabhängig von Intensitätsschwankungen der Lichtquelle 21, von Verschmutzungen der Massverkörperung 3 etc.

Die Ausführungsform des Wegmessgebers von **Figur 7** entspricht weitgehend derjenigen von Fig. 6. Das Reflexionsprisma 3 ist hier aber asymmetrisch ausgebildet in dem Sinn, dass seine Längsbegrenzungen parallel zur Bewegungsrichtung z sind.

**Figur 8** illustriert das in den Ausführungsformen der Figuren 6, 7 sowie 9-11 angewandte Messprinzip mit zwei Detektoren 22.1, 22.2. Es wird bspw. die asymmetrische Massverkörperung 3 von Fig. 7 verwendet. Die Teilfiguren 8(a)-(e) zeigen Messsituationen an verschiedenen z-Positionen. Dabei ist ersichtlich, dass an den verschiedenen z-Positionen die beiden Detektoren 22.1, 22.2 mit unterschiedlichen Lichtanteilen beaufschlagt werden, so dass aus der Differenz oder aus dem Quotienten ihrer Ausgangssignale die z-Position ermittelt werden kann.

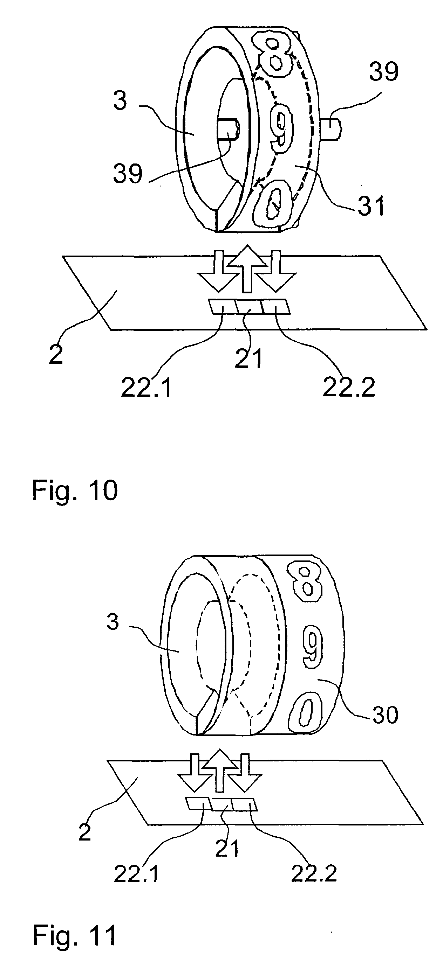

**Figur 9** zeigt schematisch eine Ausführungsform eines erfindungsgemässen Winkelmessgebers. Seine Massverkörperung 3 erhält man, anschaulich gesprochen, durch Biegen des asymmetrischen Reflexionsprismas von Fig. 7 zu einem Kreisring, wobei die Dachkante des Prismas gegen das Zentrum zeigt. An der Stelle, wo die beiden Enden des linearen Prismas zusammengefügt werden, entsteht eine Diskontinuität der Dachkante. Eine Fehlinterpretation der Detektorsignale an dieser Winkelposition kann z. B. durch Anbringen zweier zusätzlicher (nicht eingezeichneter) Detektoren, bspw. in z-Richtung neben den Detektoren 22.1, 22.2 liegend, aufgefangen werden. Die Massverkörperung kann mit Bolzen 39 zum Anflanschen an ein Zählerrad (vgl. Fig. 11) ausgestattet sein.

**Figur 10** zeigt die Ausführungsform von Fig. 9 aus einer etwas anderen Perspektive. Die Massverkörperung selbst kann direkt als Zählerrad verwendet werden, indem optisch erkennbare Zeichen, bspw. Ziffern von 0 bis 9, auf ihrer Mantelfläche 31 angebracht werden. Diese Zeichen dürfen natürlich das erfindungsgemässe Verfahren zur Winkelmessung nicht beeinträchtigen. Diese Anforderung kann z. B. dadurch erfüllt werden, indem die Zeichen mit einem Farbstoff realisiert werden, welcher bei der von der Lichtquelle 21 ausgesandten Lichtwellenlänge (bspw. im IR) weder stark reflektiert noch stark absorbiert; die optische Erkennung der Zeichen muss bei einer anderen Wellenlänge (bspw. VIS) erfolgen, bei welcher der Farbstoff reflektiert.

In **Figur 11** ist schliesslich eine Ausführungsform dargestellt, in welcher die Massverkörperung 3 an ein Zählerrad 30 angeflanscht ist. Hier sind die Zeichen natürlich auf dem Zählerrad 30 angebracht, so dass keine Gefahr besteht, dass sie das erfindungsgemässe Messverfahren stören würden. Figur 11 illustriert, wie sich die Erfindung in bestehende Verbrauchszähler aufnehmen lässt, ohne die bestehenden Zählerkomponenten wie z. B. das Zählerrad 30 ersetzen zu müssen. Der Verbrauchszähler kann weiterhin optisch ausgelesen werden, aber zusätzlich bietet die Erfindung auch die Möglichkeit der automatischen Ablesung.

Die hier diskutierten Ausführungsformen stellen bloss Beispiele dar. Bei Kenntnis der Erfindung ist der Fachmann in der Lage, weitere Ausführungsformen herzuleiten. Die in Fig. 2-5 angegebenen Messverfahren können miteinander kombiniert oder erweitert werden, oder es können weitere Messverfahren analog hergeleitet werden.

So ist es z. B. bekannt, dass ein Reflexionsprisma (wie in Fig. 5 dargestellt) durch ein komplanares Spiegelsystem ersetzt werden kann.

### BEZUGSZEICHENLISTE

- 1: Winkel- oder Wegmessgeber

- 2: Abtastkopf
- 21: Lichtquelle
- 22: Detektor

- 3: Massverkörperung
- 30: Zählerrolle
- 31-33: Flächen der Massverkörperung
- 34: Achse der Massverkörperung
- 39: Zapfen an der Massverkörperung

- 41: ausgesandter Lichtstrahl
- 42: reflektierter Lichtstrahl
- 43: Lichtfleck auf dem Abtastkopf

- 101: Entkoder gem. Stand der Technik
- 130: Zählerrädchen
- 131: Mantelfläche
- 132, 133: Stirnflächen
- 107: Auswerteeinheit
- 108: gedruckte Schaltung

- a: seitliche Verschiebung des Prismas
- g: Gitterperiode
- α: Neigungswinkel der reflektierenden Ebene
- β: Keilwinkel des Prismas
- θ: Verdrehung der Prismenachse gegenüber der Bewegungsrichtung

## Patentansprüche

1. Messgeber (1) zur Bestimmung der gegenseitigen Lage einer Massverkörperung (3) und eines relativ zur Massverkörperung (3) in einer Richtung (z) bewegbaren Abtastkopfes (2), wobei
die Massverkörperung (3) zumindest teilweise reflektierend ausgebildet ist und
der Abtastkopf (2) Mittel (21) zur Beleuchtung der Massverkörperung (3) und Mittel (22) zur Detektion von an der Massverkörperung (3) reflektiertem Licht (42) beinhaltet,
**dadurch gekennzeichnet,**
**dass** die Beleuchtungsmittel (21) derart ausgebildet sind, dass das von ihnen ausgesandte Licht (41) in Richtung (x) senkrecht zur Bewegungsrichtung (z) gebündelt ist und
**dass** die Massverkörperung (3) derart ausgebildet ist, dass die Lage des Lichtflecks (42), welcher durch Reflexion des ausgesandten Lichtes (41) an der Massverkörperung (3) auf dem Abtastkopf (2) entsteht, von der gegenseitigen Lage (z) der Massverkörperung (3) und des Abtastkopfes (2) abhängt.

2. Messgeber (1) nach Anspruch 1, wobei die Massverkörperung (3) als Reflexionsprisma oder als komplanares Planspiegelsystem ausgebildet ist, dessen Achse (34) windschief zur Bewegungsrichtung (z) liegt.

3. Messgeber (1) nach Anspruch 2, wobei die Massverkörperung (3) als im wesentlichen rechtwinkliges dreikantiges Reflexionsprisma ausgebildet und derart angeordnet ist, dass das Licht an den beiden senkrecht zueinander stehenden Prismenflächen (32, 33) je einmal reflektiert wird und durch die dritte Prismenfläche (31) ins Prisma (3) eintritt bzw. aus dem Prisma (3) austritt.

4. Messgeber (1) nach Anspruch 1, wobei die Massverkörperung (3) eine reflektierende oder brechende Fläche beinhaltet, deren Neigung (α bzw. β) in Richtung (x) senkrecht zur Bewegungsrichtung (z) sich in Bewegungsrichtung (z) ändert.

5. Messgeber (1) nach Anspruch 1, wobei die Massverkörperung (3) eine Beugungsstruktur beinhaltet, deren Beugungscharakteristik (g) in Richtung (x) senkrecht zur Bewegungsrichtung (z) sich in Bewegungsrichtung (z) ändert.

6. Messgeber (1) nach einem der vorangehenden Ansprüche, wobei die Beleuchtungsmittel (21) als Leuchtdiode und die Detektionsmittel (22) als Fotodioden ausgebildet sind.

7. Messgeber (1) nach einem der vorangehenden Ansprüche, wobei der Abtastkopf (2) eine Lichtquelle (21) und zwei Lichtdetektoren (22.1, 22.2) beinhaltet, welche auf einer Geraden senkrecht (x) zur Bewegungsrichtung (z) angeordnet sind, derart, dass die Lichtquelle (21) zwischen den beiden Lichtdetektoren (22.1, 22.2) liegt, und wobei der Abtastkopf (2) Mittel zur Auswertung von Ausgangssignalen der Lichtdetektoren (22.1, 22.2) beinhaltet, mittels welcher eine Differenz oder ein Quotient der Ausgangssignale bildbar ist.

8. Messgeber (1) nach einem der vorangehenden Ansprüche, wobei die Massverkörperung (3) kreisringförmig geformt ist.

9. Verfahren zur Bestimmung der gegenseitigen Lage einer Massverkörperung (3) und eines relativ zur Massverkörperung (3) in einer Richtung (z) bewegbaren Abtastkopfes (2), wobei
Licht (41) vom Abtastkopf (2) ausgesandt, an der Massverkörperung (3) reflektiert und auf dem Abtastkopf (2) detektiert wird,
**dadurch gekennzeichnet,**
**dass** das ausgesandte Licht (41) in Richtung (x) senkrecht zur Bewegungsrichtung (z) gebündelt wird und
**dass** das Licht (41) derart an der Massverkörperung (3) reflektiert wird, dass die Lage des Lichtflecks (43), welcher auf dem Abtastkopf (2) entsteht, von der gegenseitigen Lage (z) der Massverkörperung (3) und des Abtastkopfes (2) abhängt.

10. Verfahren nach Anspruch 9, wobei das Licht (41) an einem Reflexionsprisma oder einem komplanaren Planspiegelsystem reflektiert wird, dessen Achse (34) windschief zur Bewegungsrichtung (z) liegt.

11. Verfahren nach Anspruch 10, wobei die Massverkörperung (3) als im wesentlichen rechtwinkliges dreikantiges Reflexionsprisma ausgebildet ist, das Licht an den beiden senkrecht zueinander stehenden Prismenflächen (32, 33) je einmal reflektiert wird und durch die dritte Prismenfläche (31) ins Prisma (3) eintritt bzw. aus dem Prisma (3) austritt.

12. Verfahren nach Anspruch 9, wobei das Licht (41) an einer reflektierenden oder brechenden Fläche reflektiert bzw. gebrochen wird, deren Neigung (α bzw. β) in Richtung (x) senkrecht zur Bewegungsrichtung (z) sich in Bewegungsrichtung (z) ändert.

13. Verfahren nach Anspruch 9, wobei das Licht (41) an einer Beugungsstruktur gebeugt wird, deren Beugungscharakteristik (g) in Richtung (x) senkrecht zur Bewegungsrichtung (z) sich in Bewegungsrichtung (z) ändert.

14. Verfahren nach einem der Ansprüche 9-13, wobei das Licht (41) von einer Lichtquelle (21) ausgesandt und von zwei Lichtdetektoren (22.1, 22.2) detektiert wird, welche auf einer Geraden senkrecht (x) zur Bewegungsrichtung (z) angeordnet sind, derart, dass die Lichtquelle (21) zwischen den beiden Lichtdetektoren (22.1, 22.2) liegt, und wobei Ausgangssignale der Lichtdetektoren (22.1, 22.2) ausgewertet werden, indem eine Differenz oder ein Quotient der Ausgangssignale gebildet wird.

15. Verwendung des Messgebers (1) nach einem der Ansprüche 1-8 für die automatische Auslesung von Verbrauchszählern wie bspw. Stromzählern, Wasserzählern oder Kilometerzählern in Fahrzeugen.
